# EUROPÄISCHE PATENTANMELDUNG

(11) **EP 4 187 465 A1**
(43) Veröffentlichungstag der Anmeldung: **31.05.2023**
(21) Anmeldenummer: 21211034.0
(22) Anmeldetag: 29.11.2021
(51) Int. Cl.: G06Q 20/20

(54) **VERFAHREN ZUR AUTOMATISCHEN ABWICKLUNG VON BARGELDLOS-BEZAHLVORGÄNGEN BETREFFEND CARBON-NEUTRALEN PRODUKTEN IM EINZELHANDEL**

(71) Anmelder: Intersecure Service AG, 50999 Köln (DE)
(72) Erfinder: Die Erfindernennung liegt noch nicht vor
(74) Vertreter: dompatent von Kreisler Selting Werner - Partnerschaft von Patent- und Rechtsanwälten mbB

(57) **Zusammenfassung**

Ein Verfahren zur automatischen Abwicklung eines Bargeldlos-Bezahlvorgangs zwischen einem Käufer und sowohl einem Verkäufer als auch einem Händler für CO2-Emissionszertifikate, wobei bei dem Verfahren für den Käufer ein Bezahlterminal bereitgestellt wird. Auf dem Bezahlterminal wird neben dem zum Erwerb einer Ware und/oder einer Dienstleistung erforderlichen Kaufpreis auch ein Zusatzbetrag angezeigt, mit dem ein Projekt unterstützt wird, das die CO2-Emission im Zusammenhang mit der Schaffung der Ware und/oder der Dienstleistung kompensiert. Der Käufer kann ferner auf dem Bezahlterminal auswählen, ob er bereit ist, den Zusatzbetrag zu zahlen, und in dem Fall, dass diese Bereitschaft seitens des Käufers gegeben ist, wird der Bezahlvorgang dahingehend ausgelöst, dass der Kaufpreis dem Verkäufer und der Zusatzbetrag dem Händler für CO2-Emissionszertifikate gutgeschrieben wird.

## Beschreibung

Verfahren zur automatischen Abwicklung eines Bargeldlos-Bezahlvorgangs zwischen einem Käufer und sowohl einem Verkäufer als auch einem Händler für CO2-Emissionszertifikate.

### Hintergrund

Pro Tonne CO2 im Wärme- und Verkehrssektor werden ab dem Jahr 2021 zehn Euro fällig, der Preis steigt bis zum Jahr 2025 auf 35 Euro/Tonne. So sieht es das Brennstoffemissionshandelsgesetz (BEHG) vor, welches der Bundestag im Jahr 2019 verabschiedet hat. In den ersten drei Jahren soll der Emissionshandel laut Planung des Finanzministers 19 Mrd. Euro einbringen. Der größte Teil, nämlich 900 Mio. Euro zum Start und 2,2 Mrd. Euro im Jahr 2023, fließt in das Absenken der EEG-Umlage. Gut 250 Mio. Euro gehen dann in die Erhöhung des Wohngeldes und der Pendlerpauschale. Bezogen auf die gesamten zu erwartenden Einnahmen aus der CO2-Bepreisung im Jahr 2023 von etwas über 8 Mrd. Euro entspricht dies aber nur gut 30 Prozent. Der größte Teil landet im Energie- und Klimafonds, mit dem Maßnahmen zur Reduktion der CO2-Emissionen finanziert werden. Dieser speist sich aus den Einnahmen aus dem EU-Emissionshandel. Bisher hatte es hier aber auch einen Bundeszuschuss aus dem Haushalt gegeben, der ab 2021 entfällt.

### Emissionshandel gegen den Klimawandel

Unser Wirtschaftssystem ermöglicht unseren Lebensstil und sorgt für Wohlstand - und für Emissionen von Treibhausgasen wie CO2. Da diese den Klimawandel verursachen, ist es eines der wichtigsten klimapolitischen Ziele, Treibhausgase in der Atmosphäre zu reduzieren. Daran soll jeder mitarbeiten - Unternehmen und Privatpersonen.

Im Kyoto-Protokoll wurde auf internationaler Ebene festgelegt, wie Treibhausgase reduziert werden sollen. Als wichtiges Instrument zur Reduzierung der Emissionen von Treibhausgasen wurde der Emissionshandel eingeführt. Durch ihn soll ein Anreiz für Wirtschaftsunternehmen gesetzt werden, klimafreundlicher zu produzieren. Privathaushalte sollen ebenfalls zu mehr Klimaschutz animiert werden.

Aufgabe der Erfindung ist es, Produkte und Dienstleistungen auf einfacher Art und Weise beim Erwerb Carbon-neutral zu gestalten.

Zur Lösung dieser Aufgabe wird mit der Erfindung ein Verfahren zur automatischen Abwicklung eines Bargeldlos-Bezahlvorgangs zwischen einem Käufer und sowohl einem Verkäufer als auch einem Händler für CO2-Emissionszertifikate vorgeschlagen, wobei bei dem Verfahren
- für den Käufer ein Bezahlterminal bereitgestellt wird,
- auf dem Bezahlterminal neben dem zum Erwerb einer Ware und/oder einer Dienstleistung erforderlichen Kaufpreis auch ein Zusatzbetrag angezeigt wird, mit dem ein Projekt unterstützt wird, das die CO2-Emission im Zusammenhang mit der Schaffung der Ware und/oder der Dienstleistung kompensiert wird,
- der Käufer auf dem Bezahlterminal auswählen kann, ob er bereit ist, den Zusatzbetrag zu zahlen, und
- in dem Fall, dass diese Bereitschaft seitens des Käufers gegeben ist, der Bezahlvorgang dahingehend ausgelöst wird, dass der Kaufpreis dem Verkäufer und der Zusatzbetrag dem Händler für CO2-Emissionszertifikate gutgeschrieben wird.

Als Ergebnis des erfindungsgemäßen Verfahrens ergibt sich somit, dass der Kauf von Dienstleistungen und Produkten medienbruchfrei erfolgt, wobei der Zusatzbeitrag, d.h. der Aufpreis den Wert repräsentiert, der (zuvor) ermittelt wurde, um die Erzeugung der Ware oder aber die Bereitstellung der Dienstleistung durch den Einkauf seitens des Käufers klimaneutral gestalten zu können.

### Beschreibung der Erfindung

Der Verbraucher bekommt im Einzelhandel (z.B. Bekleidung) während des automatisierten Zahlungsvorgangs an der Kasse im Display des Zahlungsterminals angezeigt, ob er das gewählte Produkt gegen einen Aufpreis (Zusatzbeitrag) klimaneutral erwerben möchte. Er hat die Möglichkeit, einen Knopf oder Touchbutton am Bezahlterminal zur Bestätigung zu drücken, woraufhin automatisch die beiden Komponenten des erforderlichen Bezahlvorgangs ausgelöst werden.

Im Hintergrund muss für jeden Artikel ein entsprechender Wert im Warenwirtschaftssystem hinterlegt sein, damit beim Bezahlen des Artikels neben dem Preis auch auf der "Carbon-neutral-Aufpreis" aufgeschlagen werden kann.

Findet eine Barzahlung statt, muss der Kassierer den Kunden über diese Möglichkeit informieren, damit der Kassierer die Eingabe bei einer Zustimmung im Kassensystem bestätigen kann.

### "Klimaneutral" (Carbon-neutral)

Diese Kennzeichnung bestätigt, dass der Produkt-Fußabdruck kontinuierlich reduziert wird und sämtliche restlichen Emissionen ausgeglichen werden, in Übereinstimmung mit der internationalen Norm PAS 2060 (https://www.siegelklarheit.de/).

Zusätzlich bietet z.B. CarbonCare insbesondere für Transportunternehmen eine VALIDIERUNG von selbst ermittelten Emissionsdaten auf Basis der standardisierten Berechnungsmethode gemäß EN16258.

Der Betrag wird vom Abwickler/Zahlungsanbieter/Kassensoftware in einer Summe vom Verbraucher eingezogen, wobei der originäre Warenwert dem Händler gutgeschrieben und der Aufpreis an ein Institut für CO2-Lizenzen (Händler für CO2-Emissionszertifikate) überwiesen bzw. diesen gutgeschrieben wird.)

Der Händler bekommt typischerweise monatlich eine Aufstellung der gesamten Einzahlungen auf das Klimakonto.

Der Verbraucher kann sich z.B. zusätzlich registrieren und Umweltpunkte sammeln, um entsprechende Incentives zu nutzen. Die Einnahmen aus dem nationalen Emissionshandel sind unter anderem auch für Klimaschutzmaßnahmen vorgesehen. Sie sollen
- Bürger über die Entfernungspauschale entlasten,
- die Mehrwertsteuer auf Bahntickets senken,
- energetische Sanierung fördern,
- Austauschprämien für alte Öl- und Gasheizungen finanzieren und
- das Wohngeld erhöhen.

### Vertrauenswürdige Klimawirkung

Von der verifizierten Kohlenstoffentfernung über naturbasierte Lösungen bis hin zu nachhaltigen Kraftstoffen bietet z.B. die CHOOOSE-Plattform https://chooose.today/?gclid=EAIaIQobChMIwZrd84Hj8wIVhJ3VCh3RoQBdEA AYASAAEgL5cfD_BwE dutzende vertrauenswürdige, vorgeprüfte Klimalösungen, die in alle Arten von Klimaprogrammen integriert werden können, für die CO2-Emissionszertifikate ausgeteilt werden.

## Patentansprüche

1. Verfahren zur automatischen Abwicklung eines Bargeldlos-Bezahlvorgangs zwischen einem Käufer und sowohl einem Verkäufer als auch einem Händler für CO2-Emissionszertifikate, wobei bei dem Verfahren
- für den Käufer ein Bezahlterminal bereitgestellt wird,
- auf dem Bezahlterminal neben dem zum Erwerb einer Ware und/oder einer Dienstleistung erforderlichen Kaufpreis auch ein Zusatzbetrag angezeigt wird, mit dem ein Projekt unterstützt wird, das die CO2-Emission im Zusammenhang mit der Schaffung der Ware und/oder der Dienstleistung kompensiert wird,
- der Käufer auf dem Bezahlterminal auswählen kann, ob er bereit ist, den Zusatzbetrag zu zahlen, und
- in dem Fall, dass diese Bereitschaft seitens des Käufers gegeben ist, der Bezahlvorgang dahingehend ausgelöst wird, dass der Kaufpreis dem Verkäufer und der Zusatzbetrag dem Händler für CO2-Emissionszertifikate gutgeschrieben wird.
